# EUROPEAN PATENT APPLICATION

(11) **EP 2 230 514 A1**
(43) Date of publication of application: **22.09.2010**
(21) Application number: 10165585.0
(22) Date of filing: 29.12.2005
(51) Int. Cl.: G01N 33/543

(54) **Biosensor comprising a reference region and a sample region**

(30) Priority: 29.12.2004 US 27509
(62) Divisional of application: 05856040.0
(71) Applicant: Corning Incorporated, Corning, NY 14831 (US)
(72) Inventor: Carracci, Stephen J., Elmira, NY 14903 (US); Frutos, Anthony G., Painted Post, NY 14870 (US); Peng, Jinlin, Painted Post, NY 14870 (US); Piech, Garrett A., Horseheads, NY 14845 (US); Webb, Michael Brian, Lindley, NY 14858 (US)
(74) Representative: Oldroyd, Richard Duncan

(57) **Abstract**

A biosensor is described herein that can be made using any one of a number of deposition techniques to create a reference region and a sample region on a single biosensor which in the preferred embodiment is located within a single well of a microplate. The deposition techniques that can be used to help create the reference region and the sample region on a surface of the biosensor include: (1) the printing/stamping of a deactivating agent on a reactive surface of the biosensor; (2) the printing/stamping of a target molecule (target protein) on a reactive surface of the biosensor; or (3) the printing/stamping of a reactive agent on an otherwise unreactive surface of the biosensor.

## Description

### CROSS-REFERENCE TO RELATED APPLICATIONS

This application claims the benefit of U.S. Application Serial No. 11/027,509 filed on December 29, 2004 and entitled "Method for Creating a Reference Region and a Sample Region on a Biosensor and the Resulting Biosensor" which is related to U.S. Patent Application Serial No. 11/027,547 filed December 29, 2004 and entitled "Spatially Scanned Optical Reader System And Method For Using Same" (Attorney Docket No. SP04-149) the contents of which are hereby incorporated by reference herein.

### BACKGROUND OF THE INVENTION

### Field of the Invention

The present invention relates to a biosensor that has a surface with both a reference region and a sample region which were created in part by using a deposition technique such as printing or stamping. In one embodiment, the biosensor is incorporated within a well of a microplate.

### Description of Related Art

Today a biosensor like a surface plasmon resonance (SPR) sensor or a resonant waveguide grating sensor enables an optical label independent detection (LID) technique to be used to detect a biomolecular binding event at the biosensor's surface. In particular, the SPR sensor and the resonant waveguide grating sensor enables an optical LID technique to be used to measure changes in refractive index/optical response of the biosensor which in turn enables a biomolecular binding event to be detected at the biosensor's surface. These biosensors along with different optical LID techniques have been used to study a variety of biomolecular binding events including protein-protein interactions and protein-small molecule interactions.

For high sensitivity measurements, it is critical that factors which can lead to spurious changes in the measured refractive index/optical response (e.g. temperature, solvent effects, bulk index of refraction changes, and nonspecific binding) be carefully controlled or referenced out. In chip-based LID technologies, this is typically accomplished by using two biosensors where one is the actual biosensor and the other is an adjacent biosensor which is used to reference out the aforementioned factors. Two exemplary chip-based LID biosensors include Biacore's SPR platform which uses one of 4 adjacent flow channels as a reference, and Dubendorfer's device which uses a separate pad next to the sensor pad for a reference. The following documents describe in detail Biacore's SPR platform and Dubendorfer's device:
- "Improving Biosensor Analysis", Myska, J. Mol. Recognit, 1999, 12, 279-284.
- "Hydrodynamic Addressing of Detection Spots in Biacore S51", Biacore Technology Note 15.
- J. Dubendorfer et al. "Sensing and Reference Pads for Integrated Optical Immunosensors", Journal of Biomedical Optics 1997, 2(4), 391-400.

An advantage of using these types of referencing schemes is exemplified by Biacore's S51, the newest and most sensitive SPR platform available today on the market. This instrument has significantly improved sensitivity and performance because of its improved referencing which is based on the use of so-called hydrodynamic referencing to minimize noise, temperature effects, drift, and bulk index of refraction effects within a single channel. However, the chip-based LID technologies require the use of flow cell technology and as such are not readily adaptable for use in a microplate.

Biosensors that are designed to be used in a microplate are very attractive because they are amenable to high throughput screening applications. However, the microplates used today have one well which contains a sample biosensor and an adjacent well which contains a reference biosensor. This makes it difficult to reference out temperature effects because there is such a large separation distance between the two biosensors. Moreover, the use of two adjacent biosensors necessarily requires the use of two different solutions in the sample and reference wells which can lead to pipetting errors, dilution errors, and changes in the bulk index of refraction between the two solutions. As a result, the effectiveness of referencing is compromised. In an attempt to address these issues, several different approaches have been described in U.S. Patent Application No. 2003/0007896, where simultaneous measurement of the optical responses of a single biosensor and different polarizations of light are used to reference out temperature effects. These approaches, however, are not easy to implement and cannot take into account and correct for bulk index of refraction effects and nonspecific binding.

In yet another approach, O'Brien et al. used a two-element SPR sensor on which there was a reference region that was created by using laser ablation in combination with electrochemical patterning of the surface chemistry. However, this approach is difficult to implement and is of limited applicability because it requires the use of metal substrates. A detailed description about the two-element SPR sensor reference and this approach is provided in an article by O'Brien et al. entitled "SPR Biosensors: Simultaneously Removing Thermal and Bulk Composition Effects", Biosensors & Bioelectronics 1999, 14, 145-154.

As can be seen, there is a need for a biosensor that can be used in a microplate and can also be used to detect a biomolecular binding event while simultaneously referencing out temperature effects, drift, bulk index of refraction effects and nonspecific binding. This need and other needs are satisfied by the present invention.

### BRIEF DESCRIPTION OF THE INVENTION

The present invention includes a method where any one of several different deposition techniques (e.g. contact pin printing, non-contact printing, microcontact printing, screen printing, spray printing, stamping, spraying,) can be used to create a reference region and a sample region on a single biosensor which for example can be located within a single well of a microplate. The implementation of the methods used to create the reference region and the sample region on a surface of the biosensor include: (1) the selective desposition of a deactivating agent on a reactive surface of the biosensor; (2) the selective deposition of a target molecule (e.g. a protein) on a reactive surface of the biosensor; or (3) the selective deposition of an activating agent on an otherwise unreactive surface of the biosensor. The biosensor which has a surface with both the reference region and the sample region enables one to use the sample region to detect a biomolecular binding event and also enables one to use the reference region to reference out spurious changes that can adversely affect the detection of the biomolecular binding event.

### BRIEF DESCRIPTION OF THE DRAWINGS

A more complete understanding of the present invention may be had by reference to the following detailed description when taken in conjunction with the accompanying drawings wherein:
FIGURE 1 is a diagram that is used to help describe three different methods for creating a reference region and a sample region on a single biosensor in accordance with the present invention;
FIGURES 2-5 are graphs and photos that illustrate the results of experiments which were conducted to evaluate the feasibility of the first method of the present invention;
FIGURES 6-7 are graphs and photos that illustrate the results of experiments which were conducted to evaluate the feasibility of the second method of the present invention;
FIGURE 8 is a graph and photo that illustrates the results of experiments which were conducted to evaluate the feasibility of the third method of the present invention.

### DETAILED DESCRIPTION OF THE DRAWINGS

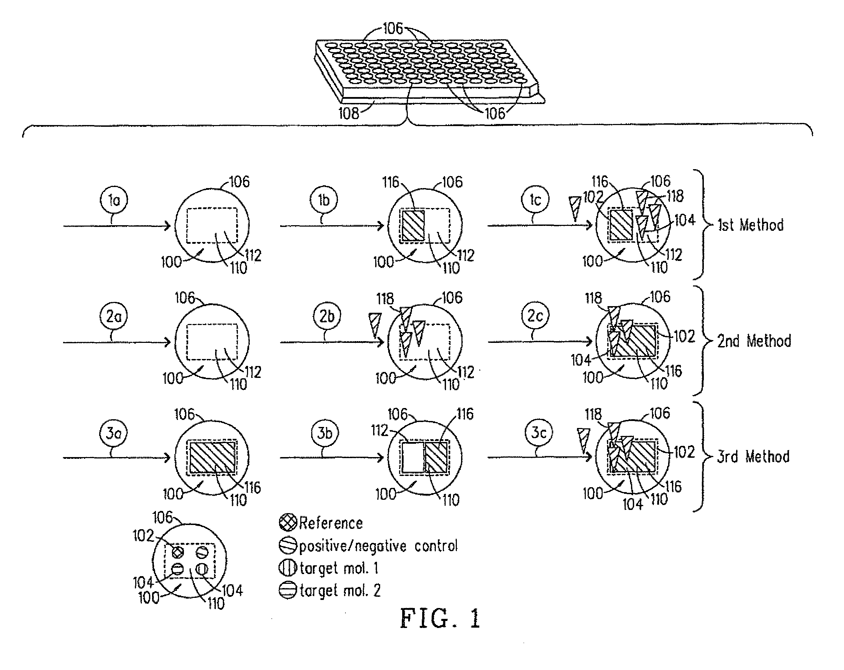

FIGURE 1 is a diagram that is used to help describe three different methods for creating a reference region 102 and a sample region 104 on a single biosensor 100 which is located at the bottom of a single well 106 in a microplate 108. However, prior to discussing the details of the present invention, it should be noted that the preferred biosensors 100 are ones that can be used to implement LID techniques like SPR sensors 100 and resonant waveguide grating sensors 100. The following documents disclose details about the structure and the functionality of these exemplary biosensors 100 which can be used in the present invention:
- European Patent Application No. 0 202 021 A2 entitled "Optical Assay: Method and Apparatus".
- U.S. Patent No. 4,815,843 entitled "Optical Sensor for Selective Detection of Substances and/or for the Detection of Refractive Index Changes in Gaseous, Liquid, Solid and Porous Samples".
The contents of these documents are incorporated by reference herein.

FIGURE 1 shows three examples of methods which use a specific deposition technique to help create the reference region 102 and the sample region 104 on the single biosensor 100 that is located within the single well 106 of the microplate 108. In the first method, the surface 110 of the biosensor 100 is coated (step 1a) with a reactive agent 112 (e.g. poly(ethylene-alt-maleic anhydride) (EMA)). (Examples of the reactive agent 112 include but are not limited to agents that present anhydride groups, active esters, maleimide groups, epoxides, aldehydes, isocyanates, isothiocyanates, sulfonyl chlorides, carbonates, imidoesters, or alkyl halides.) Then, a predefined area on the surface 110 is specifically deactivated (step 1b) by depositing a blocking/deactivating agent 116 thereon. For example, when the surface 110 is coated with an amine reactive coating such as EMA, many amine-containing reagents can be used for blocking/deactivating the surface such as ethanolamine(EA), ethylenediamine(EDA), tris hydroxymethylaminoethane (tris), O,O'-bis(2-aminopropyl)polyethylene glycol 1900 (PEG1900DA) or other polyethylene glycol amines or diamines. Alternatively, non-amine containing reagents could be used to hydrolyze the reactive group. In a subsequent immobilization step (step 1c), a target molecule 118 (e.g., protein 118) is added to the well 106. The target molecule binds only to the sensor in the area that was not treated with the deactivating agent 116. A target molecule could be a protein, a peptide, a synthetic or natural membrane, a small molecule, a synthetic or natural DNA or RNA, a cell, a bacteria, a virus. This is one method that can be used to create the reference region 102 and the sample region 104 on a single biosensor 100.

In the second method, the surface 110 of the biosensor 100 is coated (step 2a) with a reactive agent 112. A target molecule 118 is then printed (step 2b) directly on a predefined area of the surface 110 which is coated with the reactive agent 112. Thereafter, the entire well 106 is exposed (step 2c) to a deactivating agent 116 to inactivate/block the unprinted regions of the surface 110 which are used as reference regions 102. This is another method that can be used to create the reference region 102 and the sample region 104 on a single biosensor 100.

In the third method, the surface 110 of the biosensor 100 is coated (step 3a) with a material that presents functional groups (such as carboxylic acid groups) that can be converted into reactive groups. In step 3b, a predefined region of the surface is made reactive by depositing an activating reagent such as 1-[3-(dimethylamino)propyl]]-3-ethylcarbodiimide hydrochloride (EDC)/N-hydroxysuccinimide (NHS) thereon. Then, the whole well 106 is exposed to a solution that contains a target molecule 118 such that the target molecule 118 binds (step 3c) to the area of the surface 110 which was activated by printing the activating agent 112. The region of the surface 110 that does not have the attached target molecule 118 can be used as reference region 102. This is yet another method that can be used to create the reference region 102 and the sample region 104 on a single biosensor 100.

It should be noted that there are many different deposition techniques that can be used in the aforementioned methods. For instance, the deposition techniques can include: contact pin printing, non-contact printing (ink jet printing, aerosol printing), capillary printing, microcontact printing, pad printing, screen printing, silk screening, micropipetting, and spraying.

It should also be noted that one skilled in the art could use any one of the aforementioned methods to print multiple different spots on the surface 100 to form a reference area 102, positive/negative controls and/or multiple different target molecules nos. 1-2 (for example) inside the same well 106 of the microplate 108. An example of this scenario is shown at the bottom of FIGURE 1.

Following is a description about several experiments that were conducted to evaluate the feasibility of each of the three different methods of the present invention.

Referring to the experiments associated with the first method of the present invention, fluorescence assays and Corning LID assays were used to evaluate the feasibility of creating a reference (nonbinding) region 102 and a sample (binding) region 104 on a biosensor 100. Corning LID assays refer to assays performed using resonant waveguide grating sensors. In the first set of experiments, three different deactivating agents 116 (ethanolamine (EA), ethylenediamine (EDA), and O,O'-bis(2-aminopropyl)polyethylene glycol 1900 (PEG1900DA)) dissolved in borate buffer (100mM, pH9) were printed in three different wells on a slide that was coated with a reactive agent 112 (poly(ethylene-alt-maleic anhydride (EMA)). The printing was done using a Cartesian robotic pin printer equipped with a #10 quill pin which printed an array of 5X7 individual spots (spaced 300um apart) to create the printed (reference) region 102. The spots were printed close enough together such that they merged together to create a rectangular area. The wells were then incubated with a solution of biotin-peo-amine 118 which was used to evaluate the effectiveness of the printing process. It was expected that biotin 118 would bind only to the non-printed (sample) region 104 of the well. The wells were then exposed to a solution of cy3-streptavidin and imaged in a fluorescence scanner.

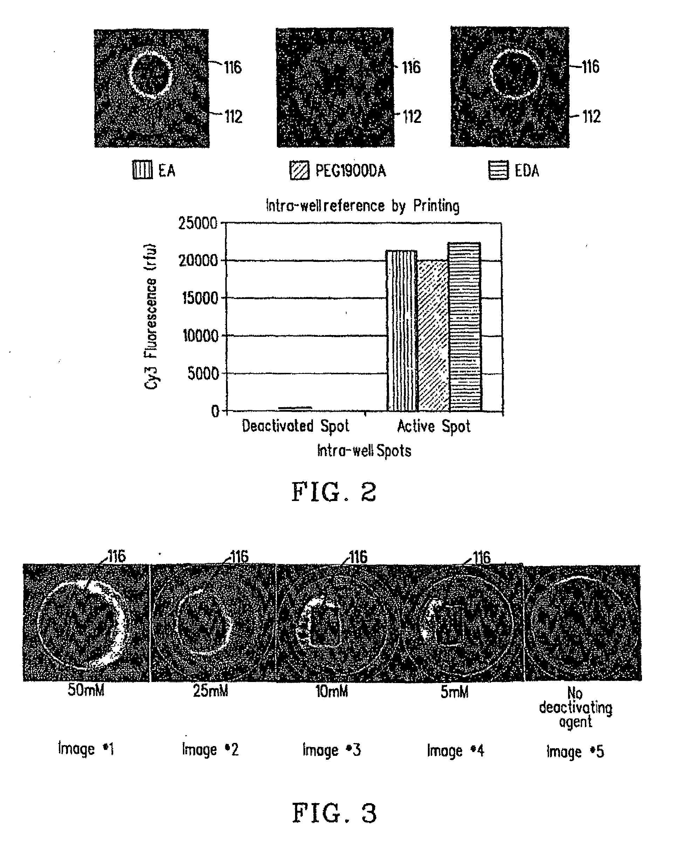

FIGURE 2 summarizes the results of these experiments. As can be seen, a fluorescence signal was not observed in a circular area within each well that corresponded to the regions printed with the deactivating agent 116. The results indicate that all three of the blocking agents 116 which included EA, PEG1900DA and EDA were effective at inactivating the reactive agent 112 (EMA), and thus prevented the binding of biotin 118 and cy3-streptavidin. The graph shows that there was a decrease in fluorescence intensity of >98% in the printed (reference) region 102 relative to the unprinted (sample) region 104. Examination of the fluorescence images also shows that the deactivating agents 116 did not significantly diffuse outside of the printed (reference) region 102.

Another set of experiments were performed to investigate the influence that the concentration of the deactivating agent 116 has on performance. Use of too concentrated solution of a deactivating agent 116 could result in cross contamination into the unprinted (sample) region 104. FIGURE 3 shows five fluorescence images that were obtained after a cy3-streptavidin binding assay was performed on a slide that was printed with varying concentrations of EA 116. It can be seen in images #1-2 where higher concentrations of EA 116 were used that there was significant spreading/cross contamination. And, it can be seen in images #3-4 where lower concentrations of EA 116 were used that the EA 116 was confined to the printed region and still efficiently deactivated the surface as evidenced by the low fluorescence signal intensity observed in that region. The last image #5 is one where no EA 116 was printed.

Yet another set of experiments were performed to demonstrate that (i) the use of a printed deactivating agent 116 within a well 106 does not negatively impact the subsequent immobilization of target molecules 118 on the unprinted (reactive) regions 112 and (ii) the use of a printed deactivating agent 116 works as well as a deactivating agent used in bulk solution. In these experiments, several wells 106 of a Corning LID microplate 108 (containing a thin Ta₂O₅ waveguide layer) were first coated with a reactive agent 112 (EMA). Then, a deactivating agent (PEG1900DA) 116 was printed on predefined areas of several of those wells 106 in the Corning LID microplate 108. As controls, additional wells 106 were either incubated with a solution of the same blocker 116 or left untreated. All wells 106 were then exposed to a solution of biotin-peo-amine 118, followed by incubation with cy3-streptavidin.

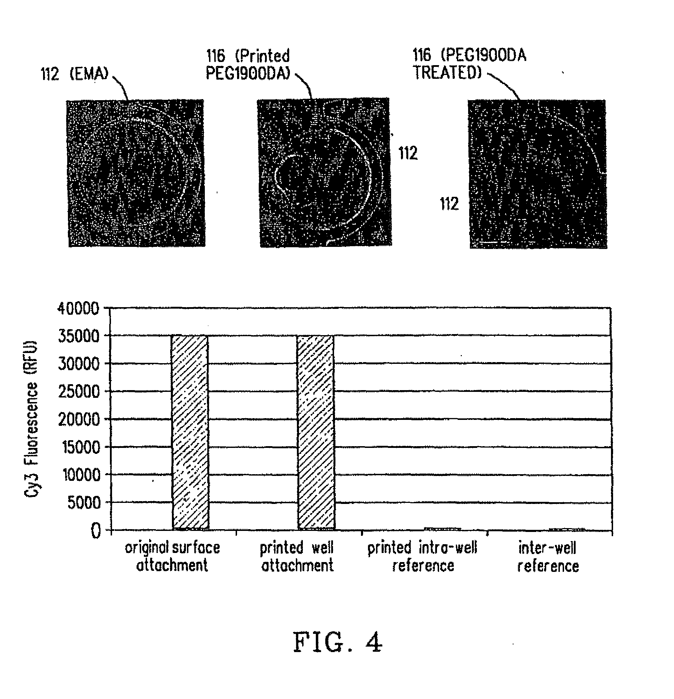

FIGURE 4 shows the results of these fluorescence imaging experiments. For the specific binding of streptavidin to biotin 118, equivalent cy3 fluorescence signals were observed for wells 106 containing half of the area blocked with the deactivating agent (PEG1900DA) 116 relative to wells 106 that did not contain a deactivating agent 116. This indicated that there was no diffusion of the blocking agent 116 to regions outside of the printed area. A comparison of the effectiveness of the deactivating (blocking) agent 116 when deposited via printing relative to bulk solution deposition indicated that both methods are equally effective as indicated by the low fluorescence signal levels for each treatment.

Additional experiments utilizing Corning LID microplates 108 were performed to demonstrate the advantages of using the present invention for intrawell referencing. In these experiments, the LID microplate 108 had several EMA coated wells 106 with a printed deactivating agent (PEG1900DA) 116. Biotin was then immobilized on the surface by incubation of the wells 106 with a solution of biotin-peo-amine. Thereafter, the microplate 108 was docked in a Corning LID instrument and the binding of streptavidin (100nM in PBS) was monitored as a function of time. During the assay, the LID instrument continuously scanned across the bottom of each well 106/biosensor 100 to monitor the signals in the reference (nonbinding) region 102 and the sample (binding) region 104. For more details about the LID instrument, reference is made to the aforementioned U.S. Patent Application Serial No. 11/027,547, filed concurrently herewith and entitled "Spatially Scanned Optical Reader System and Method for Using Same" (Attorney Docket No. SP04-149).

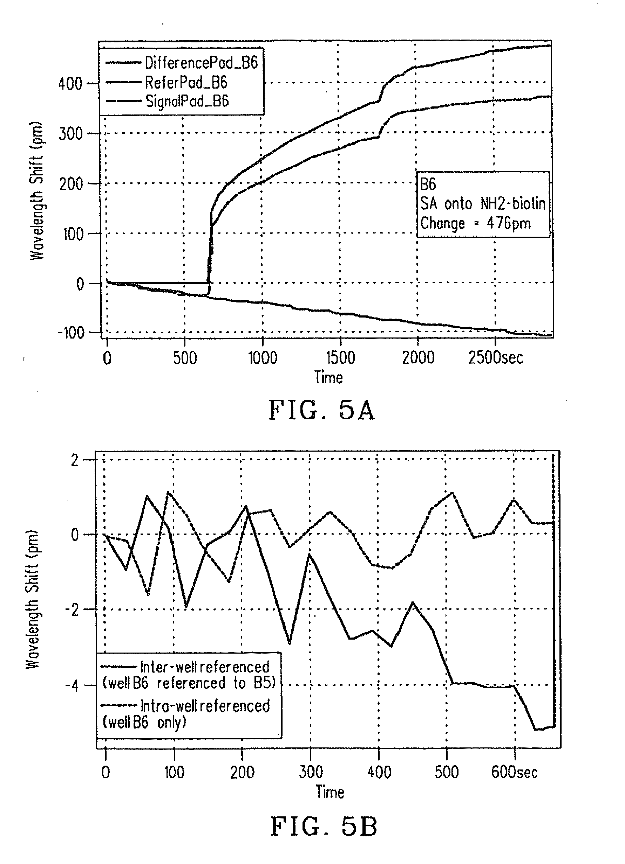

FIGURE 5A is a graph that shows the responses of the reference and sample regions 102 and 104 within one of the wells 106 during the course of the assay. In this graph, the trace "DifferencePad_B6" is the reference corrected data that was obtained by subtracting the reference trace "ReferPad_B6" from the sample trace "SignalPad_B6". As can be seen, a systematic decrease in signal vs time (i.e. drift) was present in both channels for the first ∼10minutes. However, this drift was virtually eliminated in the reference corrected trace "DifferencePad_B6". Specifically, the drift rate was ∼-2.5pm/min in the uncorrected trace "SignalPad_B6" and ∼0pm/min in the referenced trace "ReferPad_B6".

FIGURE 5B illustrates a graph that shows the first 10 minutes of the same assay where intrawell (well B6 signal and reference regions) or interwell referencing (well B6 signal region minus the adjacent well B5 reference region) was used. The data clearly shows that the intrawell referencing technique is very effective at eliminating the environmental drifts of the biosensor 100.

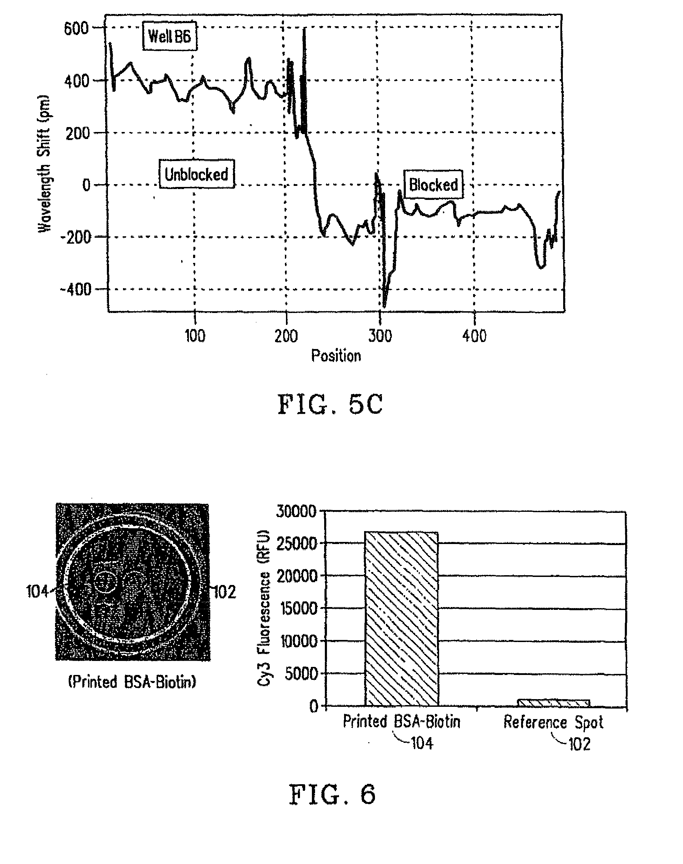

FIGURE 5C shows a line profile of the total wavelength shift (after the binding of streptavidin) as a function of position across the sensor 100. As can be seen, there is a clear, clean transition between the reference (blocked) and sample (unblocked) regions 102 and 104 on the sensor 100 which shows that the printing process can be performed in a controlled manner.

Following is a description about the experiments associated with the second method of the present invention. Again, in the second method of the present invention, the reference and sensing areas 102 and 104 within a single biosensor 100 are created by printing a target molecule 118 directly on a reactive surface 100, and then deactivating the rest of the surface 100 by treatment with a deactivating agent 116. An advantage of this method is the tremendous reduction in the volume of protein consumed (<∼1nl) compared to immobilization of the protein using bulk solution (>∼10ul).

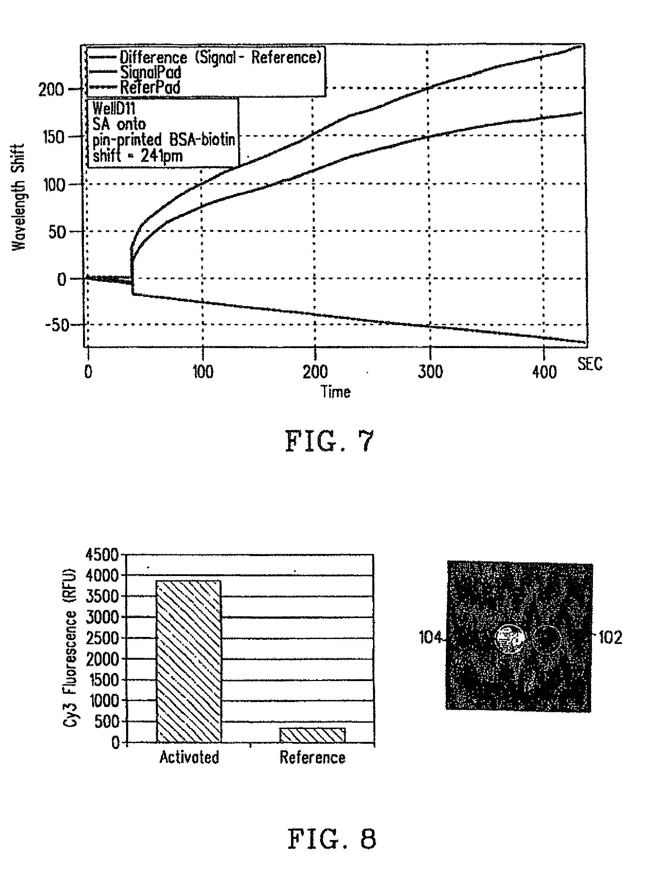

To demonstrate the feasibility of this approach, BSA-biotin 118 (50ug/ml, 100mM borate pH9) was printed in several wells 106 of a Corning LID microplate 108. Each well 106 was then treated with ethanolamine 116 (200mM in borate buffer, pH9), followed by incubation with cy3-streptavidin (100nM in PBS). FIGURE 6 is a fluorescence image in which a strong fluorescence signal can be observed in the sample area 104 in which the BSA-biotin 118 was printed and a very low signal (< 3% of the signal in the sensing area) can be observed in the reference area 102. These results demonstrate that (i) the printing process was effective at immobilizing BSA-biotin 118; (ii) no diffusion of the BSA-biotin 118 occurred outside of the printed area; (iii) the printed BSA-biotin 118 maintained its ability to bind streptavidin. FIGURE 7 is a graph which shows the results of a similar experiment that was performed using the Corning LID platform. The binding signal level of ∼240pm shows that a large amount of protein 118 was bound to the surface. Consistent with the results of the aforementioned fluorescence experiment, no binding of streptavidin was observed in the reference portion 102 of the biosensor 100.

Following is a description about the experiments associated with the third method of the present invention. Again, in the third method of the present invention, the reference and sensing areas 102 and 104 within a single biosensor 100 are created by printing an activating agent 112 (e.g. 1-[3-(dimethylamino)propyl]]-3-ethylcarbodiimide hydrochloride (EDC, Aldrich) and N-hydroxysuccinimide (NHS, Aldrich)) on an otherwise unreactive surface (e.g. a surface presenting carboxylic acid groups) to form a reactive, binding surface 104 for the attachment of target molecules 118.

To demonstrate this concept, an aqueous solution containing EDC(1mM) and NHS (1mM) was printed on a hydrolyzed EMA surface in a well 106 of a microplate 108. The entire well 106 was then incubated with biotin-amine 118 and a cy3-streptavidin fluorescence binding assay was performed. FIGURE 8 illustrates a graph and a photo in which a fluorescence signal can be observed only in the region corresponding to the printed area, demonstrating that target molecule attachment can be selectively controlled and that the unprinted regions can serve as reference areas 102.

Some additional features and advantages of using a printing/stamping technique to create an intrawell reference for LID biosensors 100 in accordance with the present invention are described next.
1) A reference area created inside the same well can dramatically reduce or eliminate the deviations caused by temperature, bulk index of refraction effects, and nonspecific binding. Referencing out these effects using an intrawell reference is more effective relative to the use of an adjacent well as a reference.
2) An intrawell reference area reduces reagent consumption by eliminating the need to use separate reference (control) wells.
3) The printing/stamping techniques are scalable to manufacturing quantities of microplates.
4) Printing/stamping of target proteins can result in an ∼100-10,000x decrease in the amount of protein used relative to the immobilization of the protein using a bulk solution reaction.
5) The printing/stamping techniques can be applied to virtually any type of substrate that can be used to make a surface on a biosensor.
6) A second detection method can also be incorporated to provide more detailed information for the biomolecular binding such as mass spectrometry.

Although several embodiments of the present invention have been illustrated in the accompanying Drawings and described in the foregoing Detailed Description, it should be understood that the invention is not limited to the embodiments disclosed, but is capable of numerous rearrangements, modifications and substitutions without departing from the spirit of the invention as set forth and defined by the following claims.

## Claims

1. A biosensor that has a surface comprising a reference region and a sample region which were created in part by using a deposition technique.

2. The biosensor of Claim 1, wherein the reference region and the sample region were created on said surface by performing the following steps:
coating said surface with a reactive agent;
depositing a deactivating agent on a predetermined area of said coated surface to create the reference region; and
exposing the surface to target molecules wherein the target molecules bind to the surface in a defined area of said coated surface that was not treated with deactivating agent to create the sample region.

3. The biosensor of Claim 1, wherein the reference region and the sample region were created on said surface by performing the following steps:
coating said surface with a reactive agent;
depositing target molecules on a predetermined area of said coated surface to create the sample region; and
exposing said coated surface to a deactivating agent to inactivate a portion of said coated surface that still has the reactive agent exposed thereon to create the reference region.

4. The biosensor of Claim 1, wherein the reference region and the sample region were created on said surface by performing the following steps:
depositing an activating agent on a predetermined area of said surface and attaching target molecules to at least a portion of said coated surface that has the activating agent exposed thereon to create the sample region; and
using the region without the activating agent as the reference region.

5. The biosensor of Claim 1, wherein said deposition technique is spraying.

6. A microplate comprising:
a frame including a plurality of wells formed therein, each well incorporating a biosensor that has a surface with a reference region and a sample region which were created in part by using a deposition technique.

7. The microplate of Claim 6, wherein the reference region and the sample region were created on said surface by performing the following steps:
coating said surface with a reactive agent;
depositing a deactivating agent on a predetermined area of said coated surface to create the reference region; and
exposing the surface to target molecules wherein the target molecules bind to the surface in a defined area of said coated surface that was not treated with deactivating agent to create the sample region.

8. The microplate of Claim 6, wherein the reference region and the sample region were created on said surface by performing the following steps:
coating said surface with a reactive agent;
depositing target molecules on a predetermined area of said coated surface to create the sample region; and
exposing said coated surface to a deactivating agent to inactivate a portion of said coated surface that still has the reactive agent exposed thereon to create the reference region.

9. The microplate of Claim 6, wherein the reference region and the sample region were created on said surface by performing the following steps:
depositing an activating agent on a predetermined area of said surface and attaching target molecules to at least a portion of said coated surface that has the activating agent exposed thereon to create the sample region; and
using the region without the activating agent as the reference region.
